Europäisches Patentamt

European Patent Office

Office européen des brevets

(19)

(11) Numéro de publication : **0 105 771**
**B1**

(12) **FASCICULE DE BREVET EUROPÉEN**

(45) Date de publication du fascicule du brevet :
21.01.87

(21) Numéro de dépôt : 83401743.6

(22) Date de dépôt : 02.09.83

(51) Int. Cl.⁴ : **G 01 F 11/08**, B 05 C 17/00,
**B 65 D 35/40**

(54) Appareil de distribution manuelle et de dosage de produits en pâte.

(30) Priorité : 03.09.82 FR 8215033

(43) Date de publication de la demande :
18.04.84 Bulletin 84/16

(45) Mention de la délivrance du brevet :
21.01.87 Bulletin 87/04

(84) Etats contractants désignés :
AT BE CH DE FR GB IT LI NL SE

(56) Documents cités :
FR-A- 2 157 845
FR-A- 2 389 105
US-A- 3 881 641

(73) Titulaire : **COMPAGNIE DES METAUX PRECIEUX**
**4 rue Beaubourg**
**F-75004 Paris (FR)**

(72) Inventeur : **Blot, Gilbert**
**12 rue Friant**
**F-75014 Paris (FR)**
Inventeur : **Vincent, Jean-Marie**
**8 chemin des Bruyères**
**F-69130 Ecully (FR)**

(74) Mandataire : **Martin, Jean-Jacques et al**
**Cabinet REGIMBEAU 26, Avenue Kléber**
**F-75116 Paris (FR)**

EP 0 105 771 B1

## Description

La présente invention concerne un appareil de distribution manuelle et de dosage de produits en pâte, plus particulièrement destiné à titre d'exemple à la distribution de pâte de brasure utilisée en bijouterie et dans les métiers d'art.

Dans les activités industrielles ou artisanales de la bijouterie, qu'il s'agisse de création ou de réparation, on réalise fréquemment des assemblages par brasure avec apport d'une pâte contenant le même métal précieux, or ou argent par exemple, que l'objet sur lequel on travaille. La pâte de brasure est donc un produit très onéreux qu'il faut doser avec précision pour réduire les pertes au minimum.

On connaît des appareils distributeurs dans lesquels une cartouche contenant la pâte sous une légère pression est raccordée à un tube souple aboutissant lui-même à une buse d'évacuation. Un jeu de deux poussoirs conjugués permet, en venant écraser localement et alternativement le tube souple, de faire progresser vers la buse d'évacuation une quantité déterminée et constante de pâte à chaque cycle. Le document FR-A-2 389 105 du même demandeur décrit par exemple un tel dispositif, conformément au préambule de la revendication 1.

Mais, principalement lorsqu'il s'agit d'un artisan, l'utilisateur doit le plus souvent, lorsqu'il passe d'un travail à un autre, changer de pâte ou changer de dosage d'une même pâte. Pour changer de pâte avec un appareil usuel il ne suffit pas de remplacer une cartouche par une autre, mais il faut aussi laver l'appareil pour le débarrasser du reliquat de pâte qui est resté dans le tube souple et dans la buse ; ce reliquat de pâte est alors perdu. Pour éviter ces pertes à chaque changement de produit, l'utilisateur devra donc disposer d'autant d'appareils que de types de pâte. En outre, il lui est difficile de régler le volume distribué à chaque cycle, celui-ci étant déterminé par construction par le volume de l'empreinte du poussoir sur le tube souple.

On connaît aussi des dispositifs dans lesquels on utilise également un tube souple entre le réservoir de pâte et l'orifice d'évacuation, et où l'on écrase localement le tube souple par un galet que l'on fait rouler vers l'évacuation pour faire sortir une quantité de pâte variable selon la course du galet ; des dispositifs de ce type sont illustrés dans US-A-3 881 461. Mais ici encore les appareils usuels se prêtent mal à la précision exigée pour des pâtes contenant des métaux précieux, et obligent généralement à des lavages, donc à des pertes, lors des changements de produit.

En particulier, l'appareil décrit aux figures 6 et 7 du brevet américain précité, servant à la distribution de produits alimentaires pâteux, comporte un ensemble réservoir-tube-buse interchangeable, et un système à deux galets indépendants, avec un galet d'obturation écrasant en permanence le tube souple sous l'action d'un ressort, et un galet de distribution manœuvré, par un levier d'actionnement, indépendamment du galet d'obturation ; le tube est de ce fait écrasé en permanence, ce qui contribue encore à l'imprécision du dosage.

La présente invention a pour but de réaliser un appareil de distribution manuelle et de dosage grâce auquel on peut, avec un seul appareil, utiliser successivement et sans perte, des pâtes de compositions différentes, et ceci avec des quantités distribuées réglables avec une grande précision dans une large plage.

L'invention a également pour but de réaliser un appareil grâce auquel le tube n'est pas affecté lorsque l'appareil reste longtemps au repos.

Selon l'invention, ces buts sont atteints au moyen d'un appareil caractérisé par le fait que la buse d'évacuation, le tube souple et le réservoir de produit sont constitués en un ensemble complet interchangeable, avec des moyens de fixation rapide du réservoir sur le corps de l'appareil, et par le fait que le dispositif de manœuvre des galets d'obturation et de distribution comporte d'une part des moyens de liaison assurant le mouvement alternatif des galets, pour la distribution et le dosage, tout en autorisant un effacement desdits galets hors du logement du corps d'appareil, pour le repos prolongé ou le changement d'ensemble complet, et d'autre part des moyens pour maintenir les deux galets à la fois en position d'effacement, selon la partie caractéristique de la revendication 1.

L'invention sera mieux comprise en se référant à un mode de réalisation particulier donné à titre d'exemple et représenté par les dessins annexés.

Les figures 1 à 3 sont des vues en coupe de l'appareil distributeur proprement dit, où le réservoir de produit et son dispositif de mise sous pression ne sont que partiellement représentés. La figure 1 montre l'appareil en position de repos, mais prêt à servir. La figure 2 le montre en fin de phase de distribution. La figure 3 le montre en position de repos de longue durée.

La figure 4 montre un ensemble réservoir-tube-buse interchangeable.

La figure 5 montre le dispositif de mise sous pression de la pâte dans le réservoir.

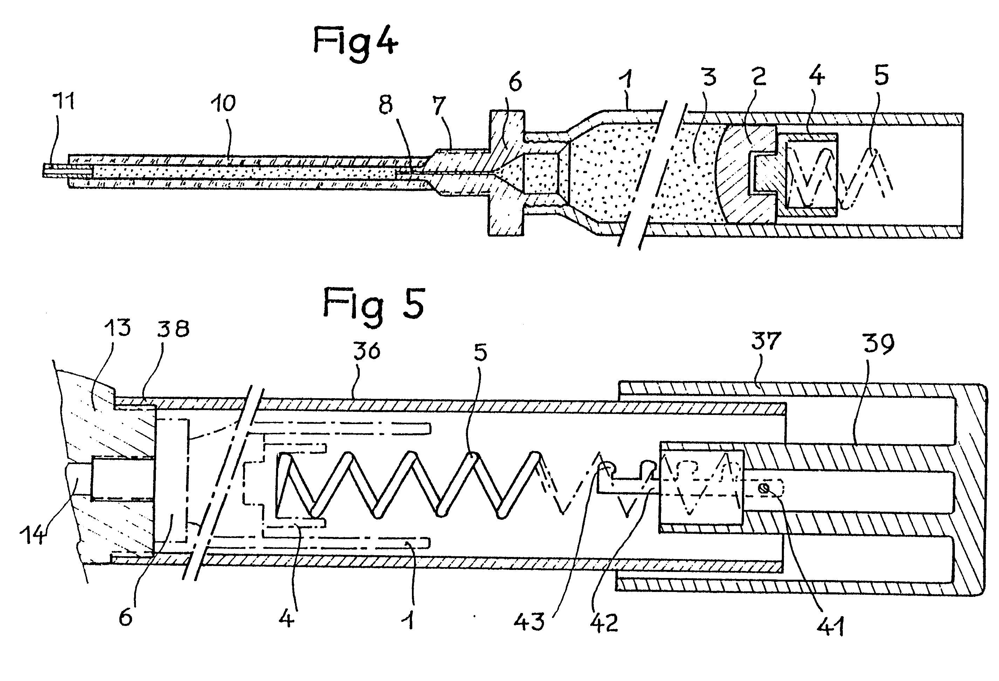

On se référera tout d'abord à la figure 4 qui montre l'ensemble d'un réservoir de pâte interchangeable, chaque ensemble étant pré-rempli de tel ou tel type de pâte pour une utilisation spécifique. L'ensemble comporte une cartouche formant réservoir 1 fermée à l'une de ses extrémités par un piston mobile 2 en contact direct avec la pâte 3. Une pièce intermédiaire 4 s'adapte sur le piston 3 pour servir de face d'appui à un ressort de compression 5 dont le rôle sera mieux explicité plus loin. Le nez de la cartouche 1 est serti sur un embout creux 6 qui comporte une partie filetée 7 prolongée par un ajutage 8. Un tube souple 10, par exemple en élastomère, est collé de façon permanente sur l'ajutage 8, et comporte à son autre extrémité une buse d'évacuation 11 également collée sur le tube 10. De tels ensembles réservoirs peuvent être fournis par les distributeurs avec des compositions de pâte variées et avec des tubes souples 10 de mêmes diamètres extérieurs mais de diamètres intérieurs variés.

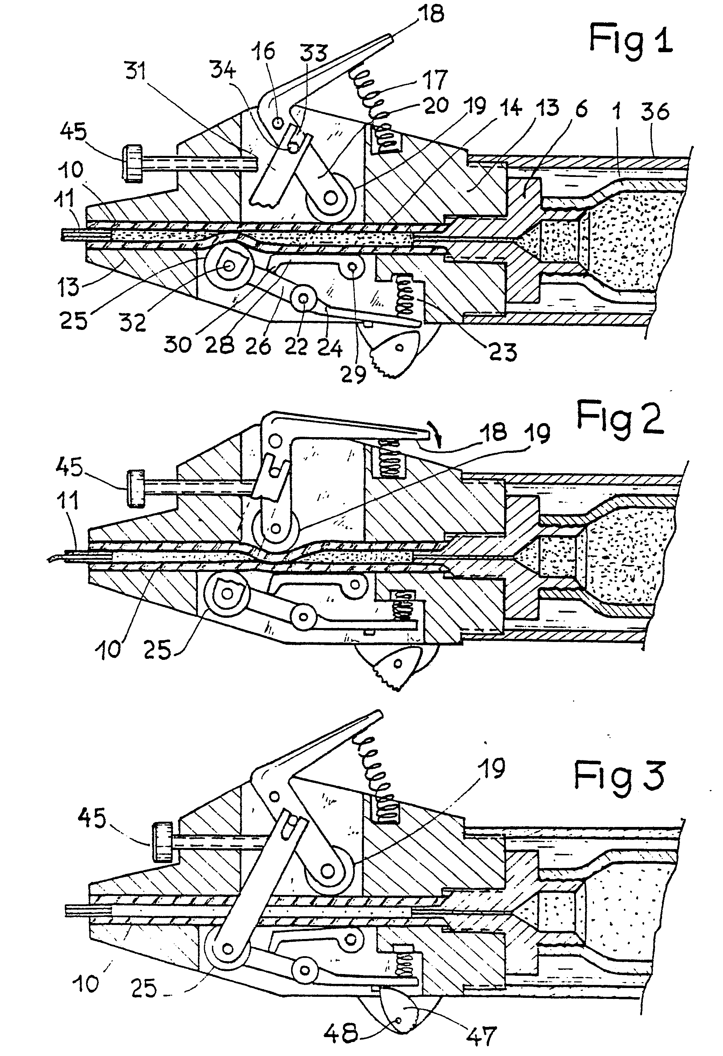

En se référant maintenant à l'ensemble des figures 1, 2 et 3, on verra que le corps 13 de l'appareil comporte un alésage longitudinal 14 traversant tout le corps, et qui reçoit le tube souple 10 lorsque le filetage 7 de l'embout 6 est vissé dans un alésage fileté conjugué qui prolonge l'alésage 14. Dans cette position seule l'extrémité libre de la buse 11 fait saillie en dehors du corps 13.

Dans un logement du corps 13 l'appareil comporte un levier coudé, articulé en 16 sur le corps, et maintenu dans la position normale de repos représentée à la figure 1 par un ressort 17 en appui à la fois sur le corps 13 et sur la branche 18 du levier qui est ainsi maintenue écartée du corps. Dans cette position le galet de distribution 19, monté fou à l'extrémité de l'autre branche 20 du levier, vient juste reposer sans pression sur le tube 10, donc sans le déformer.

De l'autre côté du tube 10, un autre levier est articulé en 22 sur le corps, et il est maintenu dans la position normale représentée à la figure 1 par un ressort 23 en appui à la fois sur le corps 13 et sur la branche 24 du levier. Dans cette position le galet d'obturation 25, monté fou à l'extrémité de l'autre branche 26 du levier, et sous l'action du ressort 23 vient écraser le tube 10 qu'il obture ainsi complètement.

Une pièce 28 articulée en 29 sur le corps 13 et prenant appui par un bec 30 sur la branche 26 du levier inférieur constitue pour le tube 10 une enclume de soutien, mobile avec le levier 26.

Les branches 20 et 26 des deux leviers sont en outre reliées de part et d'autre du tube 10, par les biellettes 31 dont l'une des extrémités est articulée en 32 sur l'axe du galet 25 et dont l'autre extrémité comporte une lumière 33 entourant un ergot 34 solidaire de la branche 20.

On se référera maintenant à la figure 5 qui montre plus complètement le capot de protection et de pression visible seulement en partie sur les figures 1 à 3. Le capot est ici constitué par une virole fixe 36 et un fond mobile 37. La virole 36 est vissée en 38 sur le corps 13 de l'appareil et entoure complètement la cartouche 1. Le fond 37 vient coiffer la virole 36 et comporte un noyau central 39 qui sert d'appui au ressort de compression 5 qui lui-même prend par ailleurs appui sur la pièce 4 de la cartouche 1. Le fond 37 est retenu prisonnier sur la virole 36 par une broche traversante 41 ; la broche 41 est engagée dans deux lumières diamétralement opposées 42 de la virole 36, ces lumières comportant des crans de positionnement 43. Dans la position représentée à la figure 5, la broche 41 est à l'extrémité de la lumière 42, et le ressort 5 est alors complètement détendu de telle sorte que, même si la cartouche 1 est pleine de pâte, aucune pression n'est exercée sur l'embout 4 et le piston 2, et la pâte 3 n'est alors pas comprimée.

On voit qu'en repoussant le fond 37 vers la gauche, en comprimant le ressort 5, on provoquera la mise sous pression de la pâte, et le fond pourra être immobilisé à la position choisie par une légère rotation pour engager la broche 41 dans l'un ou l'autre des crans 43. Bien entendu les crans seront déterminés de telle sorte que lorsque la broche est engagée dans le cran extrême le ressort 5 soit encore en légère compression même lorsque la cartouche est vide et que le piston 2 et l'embout 4 sont en bout de course.

Pour décrire plus en détail le fonctionnement, on se référera maintenant à la figure 1 où l'appareil est représenté prêt à l'emploi, avec la cartouche 1 mise en place sur le corps par vissage de l'embout 6, le tout coiffé par le capot 36 ; le fond mobile 37, non visible sur la figure 1, aura été immobilisé dans un cran 43 de façon à maintenir la pâte 3 sous pression. Cette pression est insuffisante pour vaincre la pression exercée par le galet d'obturation 25, et la pâte ne peut pas sortir de l'appareil.

Pour faire sortir un volume dosé de pâte il suffit d'appuyer sur la branche 18 en comprimant le ressort 17 comme représenté à la figure 2. Ceci amène le galet de distribution 19 à écraser d'abord localement le tube 10 en le fermant pour éviter un refoulement vers la cartouche, puis par un déplacement sensiblement parallèle à l'axe du tube 10, à refouler vers la buse 11 une dose de pâte. Ceci sera rendu possible par l'effacement progressif simultané du galet d'obturation 25, repoussé par le mouvement de l'ergot 34 transmis par les biellettes 31 contre l'action du ressort 23. On observera que pendant ce temps l'enclume 28 continue à soutenir le tube 10 pour permettre son écrasement par le galet 19, l'enclume fléchissant moins que le galet 25.

Le relâchement de la pression sur le levier 18 ramène toutes les pièces dans la position de la figure 1, avec nouvelle obturation du tube 10 par le galet 25.

Lorsque l'on utilise fréquemment l'appareil le tube 10 en élastomère est alternativement écrasé ou libéré par les galets 19 ou 25, ce qui est sans conséquence sur la bonne conservation de son élasticité. Par contre si l'appareil chargé de la même cartouche, et par conséquent du même tube souple 10, devait rester longtemps au repos, la pression permanente du galet 25 risquerait de marquer de façon permanente le tube, ce qui fausserait la précision des dosages ultérieurs. Pour remédier à cet inconvénient l'appareil comporte une came excentrée 47, articulée en 48 sur le corps, et qui en position normale telle que représentée aux figures 1 et 2 laisse entièrement libre le débattement de la branche 24 du levier inférieur sous l'action soit du ressort 23 soit de la poussée des biellettes 31. Si l'appareil doit rester longtemps au repos il est possible d'éliminer la pression du galet 25 en manœuvrant la came pour l'amener dans la position représentée à la figure 3. La came 47 repousse alors de façon permanente la branche 24 du levier inférieur, en comprimant le ressort 23 et en écartant le galet 25 du tube. Ceci est sans répercussion sur le levier 20 ni sur le galet 19 puisque la lumière 33 permet le déplacement relatif dans ce sens des biellettes 31 sur les ergots 34. Bien entendu on aura auparavant supprimé la mise en pression de la pâte 3 en ramenant le fond du capot 37 à une position assurant la détente complète du ressort 5.

Cette position de repos de longue durée et d'effacement à la fois des deux galets 19 et 25 qui, comme on le voit sur la figure 3, dégage alors complètement l'alésage 14 du corps, permet aussi d'enlever une cartouche de l'appareil pour la remplacer par une autre contenant une autre sorte de pâte. On voit en effet qu'après avoir enlevé le capot 36, ce qui oblige de toute façon à relâcher la pression sur la pâte, lorsque l'on dévisse l'embout 6 du corps, c'est tout l'ensemble représenté à la figure 4 qui est extrait de l'appareil sans qu'il reste dans celui-ci la moindre trace de la pâte qui vient d'être utilisée. On peut alors charger l'appareil avec un autre ensemble cartouche-tube-buse, et l'appareil après remise en place du capot sera prêt pour l'utilisation avec une autre pâte sans aucune perte pendant la manœuvre de substitution d'une cartouche à une autre.

On notera par ailleurs que la quantité de pâte évacuée vers la buse 11 à chaque cycle de pression sur le levier 18 correspond à peu près au volume intérieur du tube 10 compris entre la section où le galet 19 vient écraser le tube et celle de sa fin de course longitudinale. Un premier réglage de la dose unitaire à chaque cycle peut donc être obtenu en réglant la course longitudinale du galet 19 au moyen d'une vis micrométrique 45 dont l'extrémité forme une butée de fin de course réglable pour le levier 20 portant le galet 19.

Mais on observera en outre que, grâce à l'interchangeabilité particulièrement aisée des cartouches associées chacune à son propre tube souple, il est également possible de régler la dose unitaire distribuée en utilisant des tubes 10 de mêmes diamètres extérieurs mais de diamètres intérieurs différents. A chaque diamètre intérieur de tube souple correspond une plage de réglage par la vis 45, et il sera facile de déterminer une gamme de tubes tels que les plages de réglage par la vis ne se chevauchent pratiquement pas.

L'utilisateur de l'appareil, en possession d'une série d'ensembles cartouches-tubes-buses remplis chacun d'une pâte particulière, et si nécessaire de plusieurs ensembles contenant la même pâte mais avec des tubes de diamètres intérieurs différents, disposera donc d'un outil particulièrement souple à l'usage, et évitant toute perte de matière onéreuse lors des changements de travaux.

Bien entendu l'invention n'est pas strictement limitée au mode de réalisation qui a .été décrit à titre d'exemple, mais elle couvre également les réalisations qui n'en différeraient que par des détails, par des variantes d'exécution ou par l'utilisation de moyens équivalents. Ainsi par exemple le système discontinu à crans pour mise en compression du ressort 5 et de la pâte dans la cartouche pourrait aussi être remplacé par un système continu à assemblage vissé du fond 37 sur la virole 36.

L'invention s'applique également avec intérêt au dosage d'autres sortes de produits plus ou moins pâteux comme des colles, des résines ou des « crèmes à souder ». Même s'il s'agit souvent là de produits moins onéreux que des pâtes de brasure pour métaux précieux, et que par conséquent les pertes sont aussi moins coûteuses, un tel dispositif présente l'avantage de permettre de changer de produit sans avoir à faire des lavages intermédiaires de l'appareil.

## Revendications

1. Appareil de distribution manuelle et de dosage de produits en pâte, comportant un tube souple (10) entre un réservoir (1) de produit et une buse (11) d'évacuation, le tube souple (10) et la buse d'évacuation (11) étant engagés dans un logement (14) traversant le corps (13) de l'appareil, avec des moyens pour appliquer sur le tube souple, avec écrasement local dudit tube, alternativement un galet d'obturation (25) et un galet de distribution (19), ce dernier étant en outre soumis à un léger mouvement le long du tube pour faire progresser une dose de produit vers l'évacuation, caractérisé par le fait que la buse d'évacuation (11), le tube souple (10) et le réservoir (1) de produit sont constitués en un ensemble complet interchangeable, avec des moyens (6) de fixation rapide du réservoir (1) sur le corps (13) de l'appareil, et par le fait que le dispositif de manœuvre des galets d'obturation (25) et de distribution (19) comporte d'une part des moyens de liaison (31) assurant le mouvement alternatif des galets (25, 19), pour la distribution et le dosage, tout en autorisant un effacement desdits galets hors du logement (14) du corps d'appareil, pour le repos prolongé ou le changement d'ensemble complet, et d'autre part des moyens (17, 47) pour maintenir les deux galets (25, 19) à la fois en position d'effacement.

2. Appareil selon la revendication 1, caractérisé par le fait qu'il comprend plusieurs jeux d'ensembles interchangeables réservoir-tube souple-buse comportant tous des tubes souples (10) de même diamètre extérieur, mais que leurs diamètres intérieurs peuvent être différents selon les volumes désirés pour les doses unitaires du produit en pâte.

3. Appareil selon la revendication 1 ou 2, caractérisé par le fait que le réservoir (1) de produit en pâte, à son extrémité opposée au tube souple, est fermé par un piston (2) sur lequel prend appui un ressort (5) de compression destiné à maintenir le produit en pâte sous pression, tandis que l'autre extrémité du ressort (5) prend appui sur le fond (37) d'un capot tubulaire (36) entourant complètement le réservoir (1) et fixé sur le corps (3) de l'appareil de distribution.

4. Appareil selon la revendication 3, caractérisé par le fait que la position du fond (37) du capot est réglable longitudinalement entre une position où le ressort (5) est complètement détendu même lorsque le réservoir (1) est entièrement plein, et une position où le ressort (5) est légèrement comprimé même lorsque le réservoir (1) est vide.

5. Appareil selon la revendication 1, caractérisé par le fait que les moyens de liaison sont constitués par des biellettes (31) articulées à une extrémité sur l'axe du galet d'obturation (25) et dont l'autre extrémité présente une lumière (33) dans laquelle passe un ergot (34) du support du galet de distribution (19), et en ce que les moyens de maintien comportent une came (47) articulée sur le corps d'appareil et agissant sur le support du galet d'obturation (25).

**Claims**

1. Device for manually dispensing and metering pasty products, comprising a flexible tube (10) between a product tank (1) and a discharge nozzle (11), the flexible tube (10) and the discharge nozzle (11) being fitted in a receptacle (14) extending through the body (13) of the device, with means of laying a shut-off roller (25) and a dispensing roller (19) alternately against the flexible tube, with the said tube being compressed locally, the said dispensing roller (19) also being subjected to a slight movement along the tube, in order to advance a metered quantity of product towards the discharge, characterized in that the discharge nozzle (11), the flexible tube (10) and the product tank (1) are in the form of a complete interchangeable assembly, with means (6) of fastening the tank (1) quickly to the body (13) of the device, and in that the mechanism operating the shut-off roller (25) and dispensing roller (19) comprises, on the one hand, connecting means (31) ensuring the alternating movement of the rollers (25, 19) for dispensing and metering, whilst at the same time allowing the said rollers to be detracted out of the receptable (14) in the device body for the purpose of prolonged rest or a change of the complete assembly, and, on the other hand, means (17, 47) for keeping the two rollers (25, 19) in the retracted position at the same time.

2. Device according to Claim 1, characterized in that it comprises several sets of interchangeable tank/flexible-tube/nozzle assemblies all having flexible tubes (10) of the same outside diameter, but their inside diameters can be different, depending on the desired volumes of the unit metered quantities of pasty products.

3. Device according to Claim 1 or 2, characterized in that the tank (1) of pasty product is closed, at its end opposite the flexible tube, by means of a piston (2), on which bears a compression spring (5) intended for maintaining the pasty product under pressure, whilst the other end of the spring (5) bears on the bottom (37) of a tubular cap (36) which completely surrounds the tank (1) and which is fastened to the body (3) of the dispensing device.

4. Device according to Claim 3, characterized in that the position of the bottom (37) of the cap can be adjusted longitudinally between a position in which the spring (5) is totally relaxed even when the tank (1) is completely full, and a position in which the spring (5) is compressed slightly even when the tank (1) is empty.

5. Device according to Claim 1, characterized in that the connecting means consist of links (31) which at one end are articulated on the axle of the shut-off roller (25) and the other end of which have a slot (33), in which travels a pin (34) of the support of the dispensing roller (19), and in that the keeper means comprise a cam (47) articulated on the device body and acting on the support of the shut-off roller (25).

**Patentansprüche**

1. Handbetätigte Vorrichtung zur Abgabe und zum Dosieren pastöser Produkte, mit einem zwischen einem Produktbehältnis (1) und einer Auslaßdüse (11) eingesetzten verformbaren Rohr (10), das zusammen mit der Auslaßdüse (11) in eine den Vorrichtungskörper (13) durchquerende Lagerung (14) eingesetzt ist, mit Einrichtungen zur alternativen Beaufschlagung des dadurch lokal niedergedrückten verformbaren Rohres durch eine Absperrolle (25) und eine Abgaberolle (19), die zusätzlich einer geringfügigen Bewegung in Rohrlängsrichtung unterworfen ist, um eine Dosis des Produkts auf den Auslaß vorzuschieben, dadurch gekennzeichnet, daß die Auslaßdüse (11), das verformbare Rohr (10) und das Produktbehältnis (1) in einer Austauscheinheit mit Einrichtungen (6) zur Schnellhalterung des Behältnisses (1) auf dem Vorrichtungskörper (13) zusammengefaßt sind, und daß die Steuereinrichtung der Absperr- (25) und Abgaberolle (19) einerseits Verbindungseinrichtungen (31) umfaßt, mit denen die alternative Bewegung der Rollen (25, 19) für die Abgabe und das Dosieren bewirkbar sowie das Entfernen der Rollen aus der Lagerung (14) des Gerätekörpers heraus für eine längere Unterbrechung oder einen Austausch der Einheit veranlaßbar ist, und andererseits Einrichtungen (17, 47) zur gemeinsamen Halterung der beiden Rollen (25, 19) in der Entfernungsstellung.

2. Vorrichtung nach Anspruch 1, gekennzeichnet durch mehrere Sätze von Behältnis und verformbares Rohr umfassenden Austauscheinheiten, die jeweils verformbare Rohre (10) mit demselben Außendurchmesser umfassen, deren Innendurchmesser jedoch entsprechend den gewünschten Volumina für die spezifische Dosierung des pastösen Produkts verschieden sein können.

3. Vorrichtung nach Anspruch 1 oder 2, dadurch gekennzeichnet, daß das Behältnis (1) für das pastöse Produkt an seinem dem verformbaren Rohr gegenübergelegenen Ende durch einen von einer Druckfeder (5) beaufschlagten Kolben (2) verschlossen ist, die dazu dient, das pastöse Produkt unter Druck zu halten, während das andere Ende der Feder (5) auf dem Boden (37) einer rohrförmigen Haube (36) abgestützt ist, die das Behältnis (1) vollständig umgibt und auf dem Körper (3) der Abgabevorrichtung befestigt ist.

4. Vorrichtung nach Anspruch 3, dadurch gekennzeichnet, daß die Stellung des Bodens (37) der Haube in Längsrichtung einstellbar ist zwischen einer Stellung, in der die Feder (5) selbst bei vollständig gefülltem Behältnis (1) vollständig entspannt ist und einer Stellung, in der die Feder selbst bei leerem Behältnis leicht komprimiert ist.

5. Vorrichtung nach Anspruch 1, dadurch gekennzeichnet, daß die Verbindungseinrichtungen von Schwingarmen (31) gebildet sind, die mit einem Ende auf der Achse der Absperrolle (25) angelenkt sind und deren anderes Ende ein Schlitzloch aufweist, in das ein Vorsprung (34) des Lagers der Abgaberolle (19) eingreift, und daß die Halterungseinrichtungen eine Kurvenscheibe (47) umfassen, die auf dem Vorrichtungskörper angelenkt ist und die auf dem Lager der Absperrolle (25) gleitet.

Fig 1

Fig 2

Fig 3

# Fig 4

# Fig 5